# FASCICULE DE BREVET EUROPEEN

(11) **EP 3 937 505 B1**
(45) Date de publication et mention de la délivrance du brevet: **05.04.2023**
(21) Numéro de dépôt: 21180536.1
(22) Date de dépôt: 21.06.2021
(51) Int. Cl.: H04Q 11/00

(54) **PROCÉDÉ D'ETABLISSEMENT DE COMMUNICATION DANS UN RÉSEAU D'ACCES OPTIQUE**
VERFAHREN ZUM KOMMUNIKATIONSAUFBAU IN EINEM OPTISCHEN ZUGANGSNETZ
METHOD FOR ESTABLISHING COMMUNICATION IN AN OPTICAL ACCESS NETWORK

(30) Priorité: 24.06.2020 FR 2006589
(43) Date de publication de la demande: 12.01.2022
(73) Titulaire: SAGEMCOM BROADBAND SAS, 92500 Rueil-Malmaison (FR)
(72) Inventeur: REUCHE, Anthony, 92500 RUEIL MALMAISON (FR)
(74) Mandataire: Cabinet Le Guen Maillet

(56) Documents cités:
- EP-A1- 2 675 102
- EP-A1- 3 614 580
- EP-A2- 2 152 023
- WO-A1-2012/158079

## Description

### DOMAINE TECHNIQUE

La présente invention concerne un procédé d'établissement de communication dans un réseau optique d'accès (« optical access network » en anglais) de type réseau optique passif PON (« Passive Optical Network » en anglais), plus particulièrement entre un équipement de terminaison de ligne optique OLT (« Optical Line Terminaison » en anglais) et un équipement utilisateur appelé « unité de réseau optique » ONU (« Optical Network Unit » en anglais).

### ETAT DE LA TECHNIQUE ANTERIEURE

La distribution de données numériques par réseau optique d'accès jusque chez une pluralité d'utilisateurs, pour accéder par exemple à l'Internet, est réalisée au travers d'un support fibre optique. On parle de technologie FTTH (pour « Fiber To The Home » en anglais) ou de FTTB (« Fiber To The Building » en anglais). Ainsi, plusieurs systèmes de transport de données peuvent coexister sur une même fibre optique, permettant ainsi à un opérateur de service de distribuer plusieurs services au travers d'une infrastructure réduite. Des réseaux optiques passifs PON peuvent ainsi être créés entre un ou plusieurs équipements de terminaison de ligne optique OLT et de nombreux équipements utilisateur ONU, grâce à des dispositifs de couplage de longueurs d'ondes et des dispositifs de couplage de lignes optiques d'utilisateurs.

Les différents systèmes de transport correspondent à des matériels et protocoles normalisés, par exemple le système G-PON (« Gigabit Passive Optical Network » en anglais) qui permet d'atteindre un débit de 2.5 Gbps dans le sens descendant et un débit de 1,2 Gbps dans le sens montant, tel que décrit par la norme ITU-T G.984, ou le système XG-PON (« eXtended Gigabit Passive Optical Network » en anglais) qui permet d'atteindre un débit de 10 Gbps dans le sens descendant et un débit de 2.5Gbps dans le sens montant, tel que décrit par la norme ITU-T G.988, ou encore le système XGS-PON (« 10 Gigabit-capable Symmetric Passive Optical Network » en anglais) qui permet d'atteindre un débit de 10 Gbps aussi bien dans le sens montant que descendant, tel que décrit par la norme ITU-T G.9807.1.

Lorsque différents systèmes de transport coexistent sur une même fibre optique, chacun de ces systèmes de transport établissent des communications par signaux lumineux utilisant des longueurs d'ondes porteuses (λ) distinctes ou des peignes de longueurs d'ondes porteuses, que ce soit dans le sens montant ou dans le sens descendant et/ou utilisant des mécanismes de répartition temporelle d'accès TDMA (« Time Division Multiple Access » en anglais) à la fibre optique.

La coexistence des différents systèmes de transport sur une même fibre optique permet à un équipement utilisateur ONU d'être configuré pour utiliser, selon un profil utilisateur établi auprès de l'équipement de terminaison OLT pour l'équipement utilisateur ONU en question, un unique système de transport parmi ceux distribués via cette fibre optique Le document de l'état de l'art EP2152023 décrit un tel procédé de mise en communication d'un équipement utilisateur ONU. Celui-ci se configure pour communiquer par le biais d'un premier système de transport et démarre une synchronisation avec l'équipement de terminaison de ligne pour le premier système de transport. Il transmet ensuite un identifiant et une information sur le premier système de transport.

Actuellement, dans le cas où un équipement utilisateur ONU doit être connecté à une fibre optique sur laquelle plusieurs systèmes de transport coexistent, une intervention humaine, par un technicien installateur par exemple, est nécessaire afin de configurer correctement l'équipement utilisateur ONU pour utiliser le système de transport qui correspond au profil utilisateur enregistré du côté de l'équipement de terminaison OLT. Cette intervention humaine est également nécessaire si un changement de profil utilisateur intervient du côté de l'équipement de terminaison OLT, par exemple pour passer d'un service fibre optique à 500 Mbps utilisant le protocole G-PON vers un service fibre optique à 10 Gbps utilisant le protocole XGS-PON. Or, une telle intervention humaine est sujette à erreurs de configuration, ce qui entraîne notamment des accroissements de besoins en assistance téléphonique (« hotline » en anglais).

Il est alors souhaitable de pallier ces inconvénients de l'état de la technique. Il est notamment souhaitable de fournir une solution qui permette de réduire les interventions humaines pour permettre à un équipement utilisateur ONU, capable de communiquer par le biais de plusieurs systèmes de transport coexistant sur une même fibre optique, d'être configuré pour communiquer via un système de transport particulier, parmi plusieurs systèmes de transport possibles.

Il est notamment souhaitable d'accélérer la mise en communication d'un tel équipement utilisateur ONU.

Il est notamment souhaitable de fournir une solution qui permette de réduire les interventions humaines lors d'un changement de profil utilisateur.

### EXPOSE DE L'INVENTION

Il est proposé un procédé de mise en communication d'un équipement utilisateur de type ONU avec un équipement de terminaison de ligne de type OLT dans un réseau optique d'accès proposant divers systèmes de transport, l'équipement utilisateur supportant au moins deux systèmes de transport, chaque système de transport étant un ensemble de communication comportant un protocole dédié, le procédé comportant les étapes suivantes :
- l'équipement utilisateur se configure pour communiquer par le biais d'un premier système de transport parmi les systèmes de transport supportés par l'équipement utilisateur ;
- l'équipement utilisateur démarre une synchronisation avec l'équipement de terminaison de ligne pour le premier système de transport ;
- l'équipement utilisateur transmet via une couche protocolaire chapeautant tout système de transport du réseau optique d'accès, sans attendre que la synchronisation avec l'équipement de terminaison de ligne pour le premier système de transport soit terminée, une information dépendant d'un identifiant de l'équipement utilisateur et d'un identifiant du premier système de transport ;
- lorsque le système de transport à utiliser par l'équipement utilisateur n'est pas le premier système de transport, la couche protocolaire chapeautant tout système de transport du réseau optique d'accès du côté de l'équipement de terminaison de ligne interrompt la synchronisation, et l'équipement utilisateur retente la synchronisation avec un second système de transport parmi les systèmes de transport supportés par l'équipement utilisateur ;
- lorsque le système de transport à utiliser par l'équipement utilisateur est le premier système de transport, l'équipement de terminaison de ligne poursuit la synchronisation pour le premier système de transport jusqu'à mise en communication de l'équipement utilisateur dans le réseau optique d'accès.

Ainsi, la configuration de l'équipement utilisateur de type ONU est automatique, sans intervention humaine. De plus, lorsque l'équipement utilisateur de type ONU doit changer de système de transport, la fin de la synchronisation avec le système de transport initialement sélectionné n'est pas attendue, ce qui accélère la mise en communication de l'équipement utilisateur de type ONU dans le réseau optique d'accès.

Selon un mode de réalisation particulier, l'équipement de terminaison de ligne obtient, dans une base de données, un profil utilisateur associé à l'identifiant de l'équipement utilisateur, le profil utilisateur incluant l'identifiant de système de transport à utiliser par l'équipement utilisateur. Ainsi, la mise en communication de l'équipement utilisateur dans le réseau optique d'accès est conforme à un profil utilisateur provisionné.

Selon un mode de réalisation particulier, lorsqu'aucun profil utilisateur n'est associé avec l'identifiant de l'équipement utilisateur, la couche protocolaire chapeautant tout système de transport du réseau optique d'accès du côté de l'équipement de terminaison de ligne interrompt aussi la synchronisation. Ainsi, il est anticipé que la synchronisation ne peut pas aboutir, plus particulièrement en ce qui concerne des opérations d'authentification de l'équipement utilisateur pour cause de défaut de profil utilisateur.

Selon un mode de réalisation particulier, ladite information est la juxtaposition de l'identifiant de l'équipement utilisateur et de l'identifiant du système de transport configuré par l'équipement utilisateur. Ainsi, ladite information est aisément mise en forme et exploitée.

Selon un mode de réalisation particulier, lorsque l'équipement utilisateur ne détecte pas de signaux, en s'étant configuré pour le premier système de transport, pendant une fenêtre temporelle de durée prédéfinie, l'équipement utilisateur teste alors un autre système de transport parmi ceux supportés par l'équipement utilisateur. Ainsi, l'équipement utilisateur de type ONU peut être mis à terme en communication dans le réseau optique d'accès, même lorsqu'un système de transport supporté par l'équipement utilisateur de type ONU n'est pas ou plus supporté par l'équipement de terminaison de ligne de type OLT.

Il est aussi proposé un procédé de mise en communication d'un équipement utilisateur de type ONU avec un équipement de terminaison de ligne de type OLT dans un réseau optique d'accès, le procédé étant réalisé par l'équipement utilisateur, l'équipement utilisateur supportant au moins deux systèmes de transport, chaque système de transport étant un ensemble de communication comportant un protocole dédié, le procédé comportant les étapes suivantes :
- se configurer pour communiquer par le biais d'un premier système de transport parmi les systèmes de transport supportés par l'équipement utilisateur ;
- démarrer une synchronisation avec l'équipement de terminaison de ligne pour le premier système de transport ;
- transmettre via une couche protocolaire chapeautant tout système de transport du réseau optique d'accès, sans attendre que la synchronisation avec l'équipement de terminaison de ligne pour le premier système de transport soit terminée, une information dépendant d'un identifiant de l'équipement utilisateur et d'un identifiant du premier système de transport ;
- lorsque la synchronisation est interrompue, retenter la synchronisation avec un second système de transport parmi les systèmes de transport supportés par l'équipement utilisateur, et sinon, poursuivre la synchronisation pour le premier système de transport jusqu'à mise en communication de l'équipement utilisateur dans le réseau optique d'accès.

Il est aussi proposé un procédé de mise en communication d'un équipement utilisateur de type ONU avec un équipement de terminaison de ligne de type OLT dans un réseau optique d'accès, le procédé étant réalisé par l'équipement de terminaison de ligne, l'équipement de terminaison de ligne supportant divers systèmes de transport, chaque système de transport étant un ensemble de communication comportant un protocole dédié, le procédé comportant les étapes suivantes :
- démarrer une synchronisation avec l'équipement utilisateur, à l'initiative de ce dernier, pour un premier système de transport ;
- recevoir via une couche protocolaire chapeautant les systèmes de transport supportés par l'équipement de terminaison de ligne, sans attendre que la synchronisation avec l'équipement utilisateur pour le premier système de transport soit terminée, une information dépendant d'un identifiant de l'équipement utilisateur et d'un identifiant du premier système de transport ;
- lorsque le système de transport à utiliser par l'équipement utilisateur n'est pas le premier système de transport, interrompre la synchronisation par la couche protocolaire chapeautant tout système de transport du réseau optique d'accès ;
- lorsque le système de transport à utiliser par l'équipement utilisateur est le premier système de transport, poursuivre la synchronisation pour le premier système de transport jusqu'à mise en communication de l'équipement utilisateur dans le réseau optique d'accès.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par l'équipement utilisateur, tel que mentionné ci-dessus, ou le procédé réalisé par l'équipement de terminaison de ligne, tel que mentionné ci-dessus, lorsque ledit programme est exécuté par le processeur. L'invention concerne également un support de stockage d'informations stockant un tel programme d'ordinateur.

Il est aussi proposé un équipement utilisateur de type ONU destiné à être mis en communication avec un équipement de terminaison de ligne de type OLT dans un réseau optique d'accès, l'équipement utilisateur supportant au moins deux systèmes de transport, chaque système de transport étant un ensemble de communication comportant un protocole dédié, l'équipement utilisateur comportant :
- des moyens pour se configurer pour communiquer par le biais d'un premier système de transport parmi les systèmes de transport supportés par l'équipement utilisateur ;
- des moyens pour démarrer une synchronisation avec l'équipement de terminaison de ligne pour le premier système de transport ;
- des moyens pour transmettre via une couche protocolaire chapeautant tout système de transport du réseau optique d'accès, sans attendre que la synchronisation avec l'équipement de terminaison de ligne pour le premier système de transport soit terminée, une information dépendant d'un identifiant de l'équipement utilisateur et d'un identifiant du premier système de transport ;
- lorsque la synchronisation est interrompue, des moyens pour retenter la synchronisation avec un second système de transport parmi les systèmes de transport supportés par l'équipement utilisateur, et sinon, des moyens pour poursuivre la synchronisation pour le premier système de transport jusqu'à mise en communication de l'équipement utilisateur dans le réseau optique d'accès.

Il est aussi proposé un équipement de terminaison de ligne de type OLT destiné à être mis en communication avec un équipement utilisateur de type ONU dans un réseau optique d'accès, l'équipement de terminaison de ligne supportant divers systèmes de transport, chaque système de transport étant un ensemble de communication comportant un protocole dédié, l'équipement de terminaison de ligne comportant :
- des moyens pour démarrer une synchronisation avec l'équipement utilisateur, à l'initiative de ce dernier, pour un premier système de transport ;
- des moyens pour recevoir via une couche protocolaire chapeautant les systèmes de transport supportés par l'équipement de terminaison de ligne, sans attendre que la synchronisation avec l'équipement utilisateur pour le premier système de transport soit terminée, une information dépendant d'un identifiant de l'équipement utilisateur et d'un identifiant du premier système de transport ;

- lorsque le système de transport à utiliser par l'équipement utilisateur n'est pas le premier système de transport, des moyens pour interrompre la synchronisation par la couche protocolaire chapeautant tout système de transport du réseau optique d'accès ;
- lorsque le système de transport à utiliser par l'équipement utilisateur est le premier système de transport, des moyens pour poursuivre la synchronisation pour le premier système de transport jusqu'à mise en communication de l'équipement utilisateur dans le réseau optique d'accès.

Il est aussi proposé un réseau optique d'accès comportant un équipement de terminaison de ligne de type OLT tel qu'évoqué ci-dessus et au moins un équipement utilisateur de type ONU tel qu'évoqué ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un premier agencement de réseau optique d'accès, dans lequel la présente invention peut être implémentée ;
[Fig. 1B] illustre schématiquement un second agencement de réseau optique d'accès, dans lequel la présente invention peut être implémentée ;
[Fig. 2] illustre schématiquement un mode de réalisation d'équipement utilisateur du réseau optique d'accès ;
[Fig. 3] illustre schématiquement un exemple d'agencement matériel d'une unité de contrôle du mode de réalisation de la Fig. 2 ;
[Fig. 4] illustre schématiquement un agencement protocolaire implémenté par l'unité de contrôle ;
[Fig. 5] illustre schématiquement des échanges dans le cadre d'une mise en association d'un identifiant d'un équipement utilisateur du réseau optique d'accès avec un profil utilisateur ; et
[Fig. 6] illustre schématiquement des échanges dans le cadre d'une mise en communication de l'équipement utilisateur avec un équipement de terminaison du réseau optique d'accès en accord avec le profil utilisateur.

### EXPOSE DETAILLE DE MODES DE REALISATION

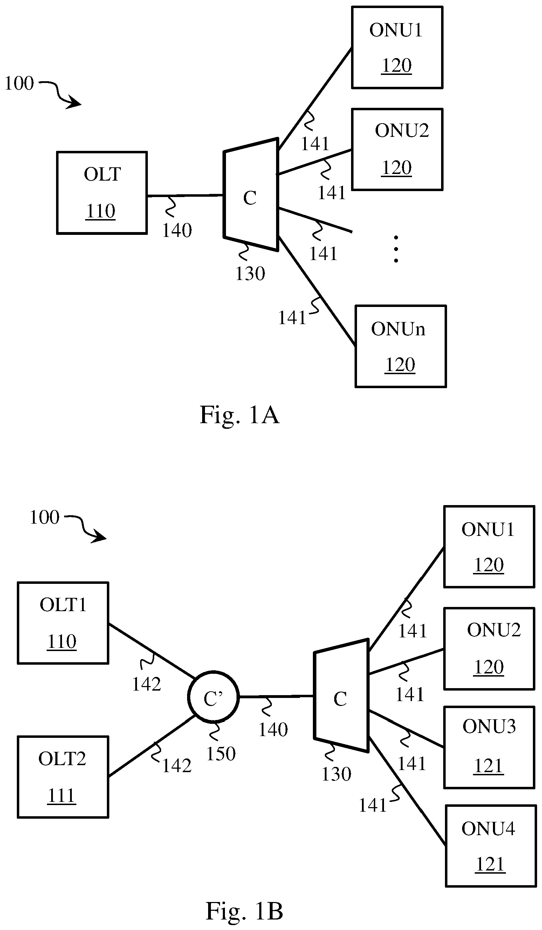

La Fig. 1A illustre schématiquement un premier agencement de réseau optique d'accès 100, de type PON, dans lequel la présente invention peut être implémentée. Le réseau optique d'accès 100 comporte un équipement de terminaison de ligne optique OLT 110 (simplement appelé par la suite *équipement OLT*) et une pluralité d'équipements utilisateur appelés « unités de réseau optique » ONU 120 (libellés ONU1, ONU2, ..., ONUn sur la Fig. 1A et simplement appelés par la suite *équipement ONU*)*.* Chaque équipement ONU 120 est capable de communiquer avec l'équipement OLT 110 par le biais de plusieurs systèmes de transport coexistant sur une même fibre optique 140. On appelle *système de transport* un ensemble de communication comportant un protocole dédié. Chaque système de transport est potentiellement défini en outre par une ou plusieurs longueurs d'ondes porteuses dédiées dans le sens montant (i.e., depuis un équipement ONU 120 vers l'équipement OLT 110) et dans le sens descendant (i.e., depuis l'équipement OLT 110 vers les équipements ONU 120). Typiquement, les systèmes de transport ont des performances différentes, telles que des débits différents, et sont donc adaptés à offrir des services différents.

Au moins deux systèmes de transport coexistent sur la fibre optique 140. Dans un mode de réalisation particulier, au moins trois systèmes de transport coexistent sur la fibre optique 140. Selon un mode de réalisation particulier, les systèmes de transport sont, au moins, un système de transport de type G-PON, un système de transport de type XG-PON et par exemple un système de transport de type XGS-PON.

Selon d'autres modes de réalisation, au moins un des systèmes de transport est de type NG-PON2 (« Next-Generation Passive Optical Network 2 » en anglais, tel que défini dans la norme ITU-T G.989), ou de type XG-PON2 (XG-PON à débits symétriques), ou de type EPON (« Ethernet Passive Optical Network » en anglais).

Dans un autre mode de réalisation, au moins un des systèmes de transport est compatible avec une technologie de transport optique de type 100G susceptible d'atteindre 100 Gbit/s.

Dans un mode de réalisation particulier, les équipements ONU 120 sont intégrés à des passerelles résidentielles.

Pour permettre de connecter la pluralité d'équipements ONU 120 à la fibre optique 140, le réseau optique d'accès 100 comporte un dispositif de couplage C 130 adapté pour coupler autant de lignes optiques d'utilisateurs 141 que d'équipements ONU 120.

La **Fig. 1B** illustre schématiquement un second agencement de réseau optique d'accès 100, dans lequel la présente invention peut être implémentée. Comparativement au premier agencement de la Fig. 1A, le second agencement de la Fig. 1B comporte un dispositif de couplage de longueurs d'ondes C' 150 permettant de coupler deux autres lignes optiques 142 à la fibre optique 140. Ces autres lignes optiques 142 permettent à au moins un autre équipement OLT (libellé OLT2 111 sur la Fig. 1B) de coexister avec l'équipement OLT 110 (libellé OLT1 110 sur la Fig. 1B) dans le réseau optique d'accès 100. Ainsi, sur la même fibre optique 140, les équipements ONU 120 (libellés ONU1 et ONU2 sur la Fig. 1B) peuvent communiquer avec l'équipement OLT1 110 et des équipements ONU 121 (libellés ONU3 et ONU4 sur la Fig. 1B) peuvent communiquer avec l'équipement OLT2 111.

Les dispositifs de couplage C 130 et C' 150 sont par exemple des commutateurs de longueurs d'ondes sélectifs WSS (« Wavelength Sélective Switch » en anglais) adaptés pour multiplexer des longueurs d'ondes dans une direction et démultiplexer des longueurs d'ondes dans la direction opposée.

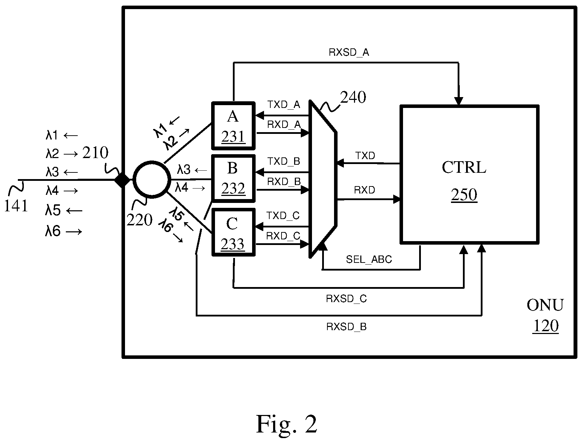

La **Fig. 2** illustre schématiquement un agencement d'équipement ONU 120.

L'équipement ONU 120 comporte un raccord optique 210 sur lequel est connectée la fibre optique, par exemple la ligne optique d'utilisateur 141, permettant de relier l'équipement ONU 120 au reste du réseau optique d'accès 100.

L'équipement ONU 120 comporte en outre un multiplexeur/démultiplexeur de longueurs d'ondes 220 permettant de combiner, respectivement séparer, les signaux optiques portés par la fibre optique 141 enfichée dans le raccord optique 210.

De manière illustrative, sur la Fig. 2, l'équipement ONU 120 comporte trois branches (A, B et C). Chaque branche supporte une direction de transmission (TX) et une direction de réception (RX), chacune ayant une longueur d'onde porteuse propre (λ1, λ3 et λ5 en transmission, et λ2, λ4 et λ6 en réception) ou un peigne de longueurs d'ondes porteuses propres.

A noter qu'une même branche peut supporter plusieurs protocoles et donc plusieurs systèmes de transport. Lorsque plusieurs systèmes de transport utilisent les mêmes longueurs d'ondes porteuses dans le réseau optique d'accès, l'utilisation de ces longueurs d'ondes porteuses est partagée dans le temps entre les systèmes de transport selon un principe de répartition temporelle d'accès TDMA.

Ainsi, à noter aussi que la Fig. 2 représente trois branches de manière illustrative et que l'équipement ONU 120 peut donc comporter un nombre différent de branches.

Des interfaces optique-électrique 231, 232, 233 comportant chacune une diode laser (pour la transmission TX) et une photodiode (pour la réception RX) permettent de convertir des signaux optiques en signaux électriques et vice versa.

L'équipement ONU 120 comporte une unité de contrôle CTRL 250.

Lorsque l'équipement ONU 120 comporte une pluralité de branches, l'équipement ONU 120 comporte en outre un commutateur de signaux électriques 240. La branche à utiliser est sélectionnée par l'unité de contrôle CTRL 250 grâce à une ligne de sélection SEL_ABC.

Ainsi, lorsque la branche A est sélectionnée par l'unité de contrôle CTRL 250 et que des signaux optiques sont détectés en réception sur la branche A, l'interface optique-électrique 231 en informe l'unité de contrôle CTRL 250 grâce à un signal RXSD_A. Le commutateur de signaux électriques 240 est alors configuré pour router des signaux présents sur une ligne de signaux RXD_A en provenance de l'interface optique-électrique 231 vers une ligne de signaux RXD en entrée de l'unité de contrôle CTRL 250. De plus, lorsque des signaux optiques sont à transmettre par le biais de la branche A, le commutateur de signaux électriques 240 est configuré pour router des signaux présents sur une ligne de signaux TXD en provenance de l'unité de contrôle CTRL 250 vers une ligne de signaux TXD_A en entrée de l'interface optique-électrique 231.

De manière similaire, lorsque la branche B est sélectionnée par l'unité de contrôle CTRL 250 et que des signaux optiques sont détectés en réception sur la branche B, l'interface optique-électrique 232 en informe l'unité de contrôle CTRL 250 grâce à un signal RXSD_B. Le commutateur de signaux électriques 240 est alors configuré pour router des signaux présents sur une ligne de signaux RXD_B en provenance de l'interface optique-électrique 232 vers la ligne de signaux RXD. De plus, lorsque des signaux optiques sont à transmettre par le biais de la branche B, le commutateur de signaux électriques 240 est configuré pour router des signaux présents sur la ligne de signaux TXD vers une ligne de signaux TXD_B en entrée de l'interface optique-électrique 232.

Enfin, lorsque la branche C est sélectionnée par l'unité de contrôle CTRL 250 et que des signaux optiques sont détectés en réception sur la branche C, l'interface optique-électrique 233 en informe l'unité de contrôle CTRL 250 grâce à un signal RXSD_C. Le commutateur de signaux électriques 240 est alors configuré pour router des signaux présents sur une ligne de signaux RXD_C en provenance de l'interface optique-électrique 233 vers la ligne de signaux RXD. De plus, lorsque des signaux optiques sont à transmettre par le biais de la branche C, le commutateur de signaux électriques 240 est configuré pour router des signaux présents sur la ligne de signaux TXD vers une ligne de signaux TXD_C en entrée de l'interface optique-électrique 233.

Un agencement d'équipement OLT 110 est aisément dérivable de l'agencement de la Fig. 2. Dans le cas de transmissions par accès TDMA, l'unité de contrôle CTRL 250 cadence, grâce à la ligne de sélection SEL_ABC, la sélection de la branche A, B ou C (lorsque l'équipement OLT 110 comporte trois branches) applicable pour chaque intervalle de temps (« time slot » en anglais) défini dans le partage temporel de l'accès à la fibre optique. Lorsque les différents systèmes de transport peuvent être utilisés simultanément dans le temps, les lignes de signaux TXD_A, TXD_B, TX_C, RXD_A, RXD_B et RXD_C sont directement connectées à l'unité de contrôle CTRL 250 qui, en l'absence de commutateur de signaux électriques 240, est configurée pour les gérer en parallèle.

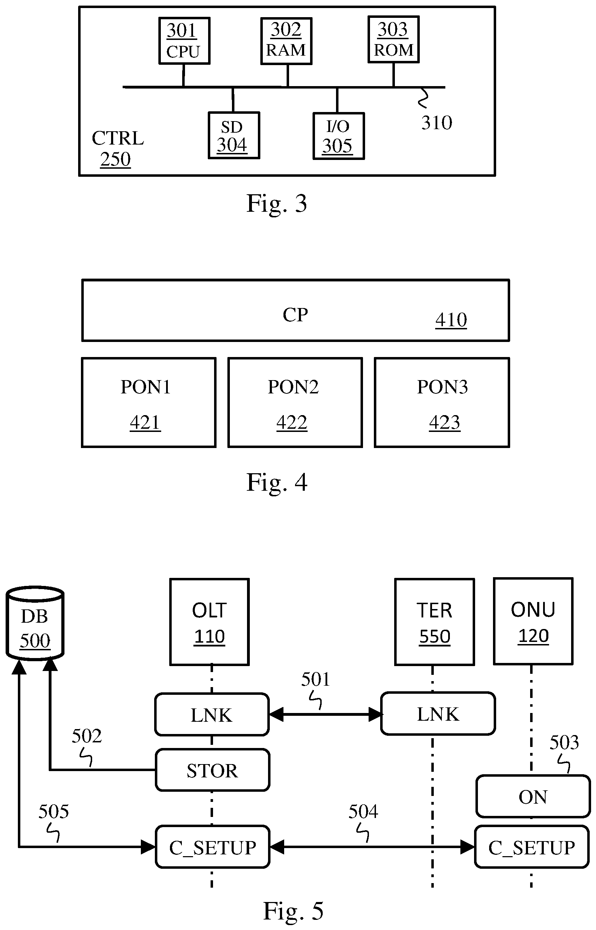

La **Fig. 3** illustre schématiquement un exemple d'agencement matériel de l'unité de contrôle CTRL 250. L'exemple d'agencement matériel présenté comporte, reliés par un bus de communication 310 : un processeur CPU 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; et au moins un ensemble d'entrées-sorties I/O 305 permettant notamment de connecter les lignes de signaux TXD et RXD.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication (autre que le réseau optique d'accès 100). Lors de la mise sous tension de l'unité de contrôle CTRL 250, le processeur CPU 301 est capable de lire de la mémoire RAM 302 des instructions et de les exécuter. Ces instructions forment un programme d'ordinateur causant la mise en oeuvre, par le processeur CPU 301, de tout ou partie des comportements, algorithmes et étapes décrits ici.

Ainsi, tout ou partie des comportements, algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des comportements, algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, l'unité de contrôle CTRL 250 comporte de la circuiterie électronique adaptée et configurée pour implémenter les comportements, algorithmes et étapes décrits ici.

La **Fig. 4** illustre schématiquement un agencement protocolaire implémenté par l'unité de contrôle CTRL 250.

L'agencement protocolaire de la Fig. 4 comporte une première pile protocolaire PON1 421 dédiée à un premier système de transport du réseau optique d'accès 100, une seconde pile protocolaire PON2 422 dédiée à un second système de transport du réseau optique d'accès 100, et une troisième pile protocolaire PON3 423 dédiée à un troisième système de transport du réseau optique d'accès 100. L'agencement peut ainsi comporter une ou plusieurs autres piles protocolaires dédiées à un ou plusieurs autres systèmes de transport respectifs du réseau optique d'accès 100, en parallèle des piles protocolaires PON1 421, PON2 422 et PON3 423.

Ces piles protocolaires sont chapeautées par une couche protocolaire commune CP 410. Ainsi, la couche protocolaire commune CP 410 peut communiquer dans le réseau optique d'accès 100 par l'une quelconque des piles protocolaires chapeautées.

Dans un mode de réalisation particulier, la couche protocolaire commune 410 intervient pendant la phase de synchronisation de la couche physique de l'équipement ONU 120 et de l'équipement OLT 110.

Selon un mode de réalisation particulier, la couche protocolaire commune CP 410 est de type OMCI (« ONU Management and Control Interface » en anglais), telle que décrite par la norme ITU-T G.988. La couche protocolaire OMCI définit un mécanisme et des formats de messages utilisables par un équipement OLT pour configurer, gérer et surveiller des équipements ONU qui lui sont connectés. Les messages de la couche protocolaire OMCI sont transportés au travers d'un canal nommé OMCC (« ONU Management and Control Channel » en anglais) et sont encapsulés dans des trames GEM (« GPON Encapsulation Method » en anglais). En variante, la couche protocolaire commune CP 410 est une sous-couche de la couche protocolaire OMCI, ou toute autre couche ou sous-couche protocolaire chapeautant les piles protocolaires PON1 421, PON2 422 et PON3 423.

La **Fig. 5** illustre schématiquement des échanges dans le cadre d'une mise en association d'un identifiant d'un équipement utilisateur ONU 120, tel qu'un numéro de série, avec un profil utilisateur.

Lorsqu'un utilisateur effectue une souscription de service (par exemple, mais non exclusivement, un abonnement d'accès à l'Internet), l'utilisateur choisit un service particulier correspondant à ses besoins et dont les caractéristiques techniques sont connues et définies (débit, système de transport sur fibre optique, volume de données, autres services accessibles...). Des profils utilisateur décrivant quels services sont accessibles aux utilisateurs auxquels ils sont respectivement associés décrivent ces caractéristiques techniques et sont stockés dans une base de données DB (« database » en anglais) 500 accessible depuis l'équipement OLT 110. Au cours du temps, les services à rendre accessibles à un utilisateur via son équipement ONU 120 peuvent évoluer, et ainsi, le profil utilisateur associé à cet utilisateur peut évoluer en conséquence. Cependant, à tout instant, un profil utilisateur n'autorise qu'un seul système de transport à l'équipement ONU 120 auquel ledit profil utilisateur est applicable. Par exemple, un opérateur de service peut au cours du temps faire évoluer son infrastructure de réseau optique d'accès 100, et ajouter des systèmes de transport que l'équipement ONU 120 saurait nativement utiliser mais qui n'étaient jusqu'alors pas mis à sa disposition via le réseau optique d'accès 100. L'opérateur de service peut aussi au cours du temps faire évoluer son infrastructure de réseau optique d'accès 100 en supprimant un ou plusieurs systèmes de transport présents jusqu'alors.

L'équipement OLT 110 doit être en mesure de faire le lien entre l'équipement ONU 120 installé chez un utilisateur et le profil utilisateur applicable à cet utilisateur. Il est possible de provisionner par avance la base de données DB 500, en associant un identifiant de l'équipement ONU 120 en question avec le profil utilisateur applicable. Cela nécessite toutefois d'effectuer cette association avant de fournir l'équipement ONU 120 à l'utilisateur, ce qui empêche d'approvisionner par avances des points de distribution des équipements ONU, et ce qui peut nécessiter des procédures lourdes et complexes pour l'opérateur de service. La Fig. 5 propose une approche alternative qui permet de simplifier cette phase, en provisionnant la base de données DB 500 après avoir fourni l'équipement ONU 120 à l'utilisateur.

Lors de l'installation de l'équipement ONU 120 chez l'utilisateur, l'utilisateur ou un installateur utilise un terminal TER 550 pour déclarer le lien entre l'équipement ONU 120 et le profil utilisateur. Le terminal TER 550 est par exemple un ordinateur, un téléphone portable, un téléphone intelligent (« smartphone » en anglais) ou une tablette. Le terminal TER 550 comporte une application ou un navigateur (« browser » en anglais) permettant de se connecter à un serveur, par exemple embarqué par l'équipement OLT 110, afin de fournir des informations à associer avec un profil utilisateur stocké dans la base de données DB 500. Le serveur peut par exemple exporter un portail web pour permettre à l'utilisateur ou à l'installateur d'effectuer des saisies d'informations. Dans une variante, le terminal TER 550 déclare au serveur le lien entre l'équipement ONU 120 et le profil utilisateur par un message texte de type SMS (« Short Messaging System » en anglais).

Considérons à titre illustratif que le serveur en question est embarqué par l'équipement OLT 110.

Ainsi, dans une étape 501, le terminal TER 550 interagit avec l'équipement OLT 110 pour fournir une information d'association entre un identifiant de l'équipement ONU 120 en cours d'installation chez l'utilisateur et une information représentative du profil utilisateur (opération libellée LNK sur la Fig. 5). Par exemple, l'identifiant de l'équipement ONU 120 est un numéro de série inscrit sur un boîtier de l'équipement ONU 120 ou un carton d'emballage de l'équipement ONU 120, que l'utilisateur ou l'installateur saisit via le terminal TER 550. Selon un autre exemple, l'identifiant de l'équipement ONU 120, tel que son numéro de série, est présenté sur le boîtier de l'équipement ONU 120 ou son carton d'emballage par le biais d'un code à barres, éventuellement à deux dimensions (appelé *QR code*), et le terminal TER 550 est muni d'un lecteur optique adapté pour scanner de tels codes à barres. Selon encore un autre exemple, l'identifiant de l'équipement ONU 120, tel que son numéro de série, est présenté par l'équipement ONU 120 via un web serveur embarqué par l'équipement ONU 120 et accessible via une interface de réseau local LAN (« Local Area Network » en anglais) de l'équipement ONU 120. L'information représentative du profil utilisateur peut être un numéro de client ou un numéro de contrat de service.

Dans une étape 502, l'équipement OLT 110 stocke dans la base de données DB 500 le lien entre le profil utilisateur et l'équipement ONU 120 fourni à l'utilisateur correspondant (opération libellée STOR sur la Fig. 5). Ainsi, lorsque l'équipement ONU 120 en question cherche ultérieurement à être mis en communication dans le réseau optique d'accès 100 et ainsi à accéder aux, l'équipement OLT 110 est en mesure de déterminer quels services et caractéristiques techniques correspondent au profil utilisateur applicable.

Dans une étape 503, l'équipement ONU 120 est allumé (opération libellée ON sur la Fig. 5) et est raccordé à la ligne optique d'utilisateur 141 destinée à l'utilisateur en question.

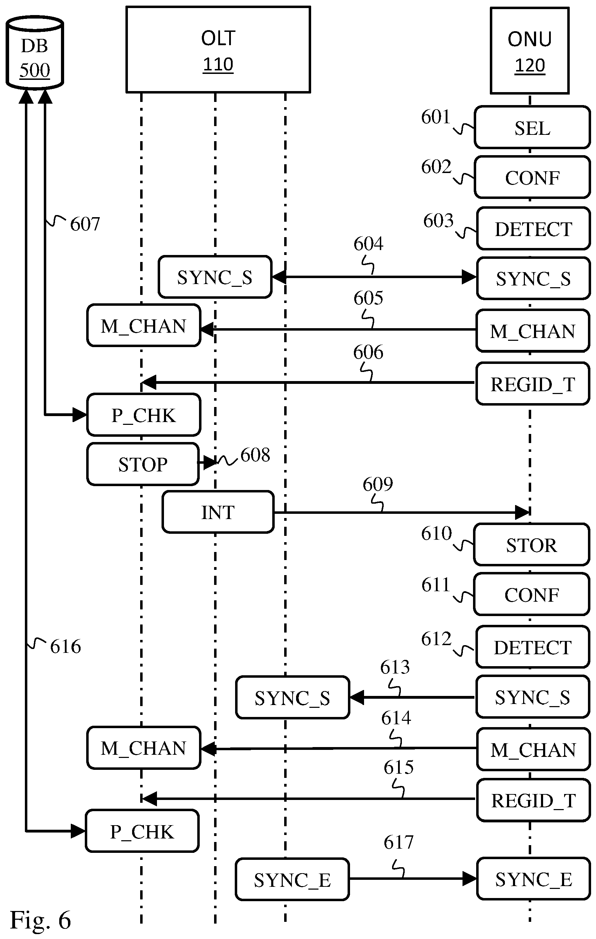

Dans une étape 504, l'équipement ONU 120 et l'équipement OLT 110 interagissent afin de configurer l'équipement ONU 120 pour utiliser le système de transport tel que défini dans le profil utilisateur applicable (opération libellée C_SETUP sur la Fig. 5). Pendant cette opération, l'équipement OLT 110 accède dans une étape 505 à la base de données DB 500 afin de récupérer le profil utilisateur applicable d'après un identifiant d'équipement ONU soumis par l'équipement ONU 120. Cet aspect est détaillé ci-après en relation avec la Fig. 6.

La **Fig. 6** illustre schématiquement des échanges dans le cadre d'une mise en communication d'un équipement ONU 120 avec l'équipement OLT 110 en accord avec le profil utilisateur applicable. Il est considéré au lancement de l'algorithme de la Fig. 6 que la base de données DB 500 est provisionnée avec le profil utilisateur applicable à l'équipement ONU 120, en association avec l'identifiant de l'équipement ONU 120. Au lancement de l'algorithme de la Fig. 6, l'équipement ONU 120 est capable de communiquer dans le réseau optique d'accès 100 par le biais d'au moins deux systèmes de transport distincts (ou au moins trois systèmes de transport distincts dans un mode de réalisation particulier), mais n'a pas connaissance du système de transport déclaré dans le profil utilisateur applicable.

Dans une étape 601, l'équipement ONU 120 démarre et sélectionne (opération libellée SEL sur la Fig. 6) un système de transport par défaut parmi les systèmes de transport supportés par l'équipement ONU 120. Par exemple, une information représentative du système de transport par défaut est stockée dans un paramètre WanMode en mémoire non volatile de l'équipement ONU 120. Par exemple, le paramètre WanMode indique que l'équipement ONU 120 doit utiliser par défaut un système de transport de type G-PON, qui peut toutefois ne pas correspondre au système de transport déclaré dans le profil utilisateur applicable.

Dans une étape 602, l'équipement ONU 120 se configure pour lui permettre de communiquer dans le réseau optique d'accès 100 en utilisant le système de transport par défaut (opération libellée CONF sur la Fig. 6). L'équipement ONU 120 met par exemple en place un pilote dédié, et configure la branche adéquate (voir Fig. 2) pour transmettre et recevoir des signaux via le système de transport par défaut.

Dans une étape 603, l'équipement ONU 120 se met en attente de détecter des signaux optiques de longueur d'onde porteuse (ou de peigne de longueurs d'ondes porteuses) associée au système de transport configuré (opération libellée DETECT sur la Fig. 6).

Dans une variante de réalisation, dans laquelle l'équipement ONU 120 ne dispose pas d'information définissant un système de transport par défaut (e.g., paramètre WanMode mis à une valeur non représentative d'un système de transport par défaut), l'équipement ONU 120 se met directement en mode de détection de signaux optiques. L'équipement ONU 120 peut alors déterminer la longueur d'onde porteuse (ou le peigne de longueurs d'ondes porteuses) des signaux optiques détectés et en déterminer quel système de transport sélectionner pour se configurer.

Dans une étape 604, l'équipement ONU 120 démarre une opération de synchronisation (démarrage libellé SYNC_S sur la Fig. 6) avec l'équipement OLT 110 selon le système de transport configuré. L'équipement ONU 120 soumet alors son identifiant, tel que son numéro de série. Telle que définie par exemple dans la norme ITU-T G.984.1 pour un système de transport de type G-PON, cette opération de synchronisation peut prendre un certain temps. Il est toutefois possible de ne pas attendre la fin de cette opération de synchronisation au niveau de la pile protocolaire du système de transport en question pour commencer à transmettre des messages selon la couche protocolaire commune CP 410, dès lors que l'équipement OLT 110 a reconnu que l'identifiant soumis par l'équipement ONU 120 correspond à un identifiant autorisé.

Typiquement, l'opération de synchronisation démarre par une détection de début de trame par l'équipement ONU 120. Le début de trame est par exemple marqué par un bloc de contrôle physique PCB (« Physical Control Block » en anglais) avec un champ de synchronisation dédié PSYNC. Considérant que l'équipement ONU 120 a détecté un tel début de trame (e.g., champ PSYNC contenant une valeur valide), l'équipement ONU 120 est en mesure de déterminer les instants de débuts de cycles suivants (découpage du temps en cycles de durée prédéfinie). L'équipement ONU 120 se met alors en attente de recevoir des paramètres réseau (e.g., dans un message appelé « Upstream_Overhead ») et se configure en accord avec ces paramètres réseau. Puis, sur requête de l'équipement OLT 110, l'équipement ONU 120 transmet son identifiant (e.g., numéro de série). Dans le cas où l'identifiant soumis par l'équipement ONU 120 correspond à un identifiant autorisé, des échanges de télémétrie (« ranging » en anglais) interviennent pour déterminer un délai d'égalisation (« equilization delay » en anglais) à appliquer par l'équipement ONU 120 dans ses transmissions dans le réseau optique d'accès 100 pour éviter des collisions avec d'autres équipements ONU présents dans le réseau optique d'accès 100 et compenser des différences de longueur entre les lignes optiques d'utilisateurs 141. A cet instant, un canal de commande par le biais de la couche protocolaire commune CP 410 peut être établi, bien que l'opération de synchronisation ne soit pas achevée pour le protocole du système de transport. En effet, pour achever l'opération de synchronisation, il reste au moins à effectuer des échanges afin d'authentifier l'équipement ONU 120, au-delà de l'identification apportée par son identifiant (e.g., numéro de série). Une vérification de clef d'authentification, vue comme un mot de passe et fournie par l'équipement ONU 120 à l'équipement OLT 110, est alors réalisée. Ce type d'opération est bien connu pour être particulièrement chronophage.

Ainsi, dans une étape 605, un canal de commande par le biais de la couche protocolaire commune CP 410 est établi entre l'équipement OLT 110 et l'équipement ONU 120 (opération libellée M_CHAN sur la Fig. 6) sans attendre la fin de l'opération de synchronisation au niveau du système de transport configuré par l'équipement ONU 120.

Une fois le canal de commande établi, l'équipement ONU 120 transmet (opération libellée REGID_T sur la Fig. 6) à l'équipement OLT 110, dans une étape 606, une information dépendant de son identifiant et d'un identifiant du système de transport configuré (i.e., pour lequel la synchronisation a été lancée). Cette information est appelée ici *« identifiant d'enregistrement RegID ».* En appliquant une opération prédéfinie, l'équipement OLT 110 est capable de retrouver, à partir de l'identifiant d'enregistrement RegID, l'identifiant de l'équipement ONU 120 et l'identifiant du système de transport configuré par l'équipement ONU 120.

Selon un mode de réalisation particulier, l'identifiant d'enregistrement RegID est la juxtaposition de l'identifiant de l'équipement ONU 120 et l'identifiant du système de transport configuré par l'équipement ONU 120 (chacun étant typiquement représenté par une quantité prédéfinie de digits).

Dans un mode de réalisation, l'identifiant d'enregistrement RegID repose sur l'identifiant de l'équipement ONU 120 correspondant à l'identifiant utilisé lors de l'étape 604 de la synchronisation de la couche physique libellé SYNC_S, c'est-à-dire que l'identifiant d'enregistrement RegID est obtenu à partir du numéro de série de l'équipement ONU 120.

Dans un exemple, le numéro de série de l'équipement ONU 120 est 850625463. L'équipement ONU 120 est compatible avec deux systèmes de transport, respectivement G-PON et XGS-PON. L'identifiant du système de transport G-PON est 01. L'identifiant du système de transport XGS-PON est 02. L'identifiant d'enregistrement RegID peut être obtenu en concaténant son numéro de série avec un identifiant de transport. Ainsi pour l'équipement ONU 120, l'identifiant d'enregistrement RegID correspondant au système de transport G-PON est 85062546301, et l'identifiant d'enregistrement RegID correspondant au système de transport XGS-PON est 8506256302.

Dans d'autres exemples, différentes juxtapositions de l'identifiant de l'équipement ONU 120 et l'identifiant du système de transport configuré par l'équipement ONU 120 peuvent être utilisées, telles que, et listées de façon non exhaustive : une concaténation particulière, ou une opération de type modulo, ou une opération binaire telle qu'un OU EXLCUSIF (opération « XOR » en anglais).

Dans un autre mode de réalisation, l'identifiant de l'équipement ONU 120 servant à l'obtention de l'identifiant d'enregistrement RegID correspond à une partie du numéro de série de l'équipement ONU 120.

Dans un autre mode de réalisation, l'identifiant de l'équipement ONU 120 servant à l'obtention de l'identifiant d'enregistrement RegID correspond à un élément de désignation attribué par le fabricant dudit équipement ONU 120 et différent de son numéro de série, ou attribué par l'opérateur de service.

Dans une étape 607, l'équipement OLT 110 obtient au niveau de la couche protocolaire commune CP 410, à partir de l'identifiant d'enregistrement RegID, l'identifiant de l'équipement ONU 120 et l'identifiant du système de transport configuré par l'équipement ONU 120. Puis, l'équipement OLT 110 vérifie, auprès de la base de données DB 500, quel système de transport est déclaré dans le profil utilisateur associé à l'identifiant soumis par l'équipement ONU 120 (opération libellée P_CHK sur la Fig. 6).

Dans une étape 608, l'équipement OLT 110 vérifie que le système de transport, qui est déclaré dans le profil utilisateur, correspond à l'identifiant du système de transport configuré par l'équipement ONU 120. Considérons ici, à titre illustratif, que ce ne soit pas le cas. Alors, au sein de l'équipement OLT 110, la couche protocolaire commune CP 410 instruit la pile protocolaire (par exemple la pile protocolaire PON2 422) dédiée au système de transport configuré par l'équipement ONU 120, et pour laquelle la synchronisation avec l'équipement ONU 120 est en cours, de stopper la synchronisation avec l'équipement ONU 120. Ainsi, dans une étape 609, la pile protocolaire en question interrompt la synchronisation avec l'équipement ONU 120, typiquement selon les conditions définies par la norme en vigueur pour le système de transport considéré (e.g., la norme ITU-T G.984 pour un système de transport de type G-PON, la norme ITU-T G.9807 pour un système de transport de type XGS-PON...).

Dans l'éventualité où la base de données DB 500 ne serait pas encore provisionnée avec une association entre l'identifiant de l'équipement ONU 120 et un profil utilisateur, alors la couche protocolaire commune CP 410 instruit aussi ladite pile protocolaire de stopper la synchronisation avec l'équipement ONU 120, qui doit alors réitérer sa tentative de connexion au réseau optique d'accès 100.

Dans une étape 610, l'équipement ONU 120 détecte que la synchronisation avec l'équipement OLT 110 a été interrompue, et l'équipement ONU 120 met à jour (opération libellée STOR sur la Fig. 6) l'information définissant le système de transport par défaut, c'est-à-dire le paramètre WanMode, avec un autre système de transport avec lequel l'équipement ONU 120 est compatible et pas encore testé par l'équipement ONU 120. De cette manière, lors d'un prochain redémarrage de l'équipement ONU 120, l'équipement ONU 120 ne teste pas en premier le système de transport pour lequel la synchronisation vient d'être interrompue par l'équipement OLT 110.

Dans une étape 611, l'équipement ONU 120 se configure pour lui permettre de communiquer dans le réseau optique d'accès 100 en utilisant cet autre système de transport (opération libellée CONF sur la Fig. 6). L'équipement ONU 120 met par exemple en place un pilote dédié, et configure la branche adéquate (voir Fig. 2) pour transmettre et recevoir des signaux via cet autre système de transport.

Dans une étape 612, l'équipement ONU 120 se met en attente de détecter des signaux optiques de longueur d'onde porteuse (ou de peigne de longueurs d'ondes porteuses) associée au système de transport configuré (opération libellée DETECT sur la Fig. 6).

Dans une étape 613, l'équipement ONU 120 démarre une opération de synchronisation (démarrage libellé SYNC_S sur la Fig. 6) avec l'équipement OLT 110 selon le système de transport configuré. L'équipement ONU 120 soumet alors son identifiant, tel que son numéro de série.

Dans une étape 614, un canal de commande par le biais de la couche protocolaire commune CP 410 est établi entre l'équipement OLT 110 et l'équipement ONU 120 (opération libellée M_CHAN sur la Fig. 6) sans attendre la fin de l'opération de synchronisation au niveau du système de transport configuré par l'équipement ONU 120.

Une fois le canal de commande établi, l'équipement ONU 120 transmet (opération libellée REGID_T sur la Fig. 6) à l'équipement OLT 110, dans une étape 615, l'identifiant d'enregistrement RegID. L'identifiant d'enregistrement RegID fourni ici est différent de celui précédemment fourni à l'étape 606, puisque l'équipement ONU 120 utilise un autre système de transport.

Dans une étape 616, l'équipement OLT 110 obtient au niveau de la couche protocolaire commune CP 410, à partir de l'identifiant d'enregistrement RegID, l'identifiant de l'équipement ONU 120 et l'identifiant du système de transport configuré par l'équipement ONU 120. Puis, l'équipement OLT 110 vérifie, auprès de la base de données DB 500, quel système de transport est déclaré dans le profil utilisateur associé à l'identifiant soumis par l'équipement ONU 120 (opération libellée P_CHK sur la Fig. 6).

Dans une étape 617, l'équipement OLT 110 vérifie que le système de transport, qui est déclaré dans le profil utilisateur, correspond à l'identifiant du système de transport configuré par l'équipement ONU 120. Considérons ici, à titre illustratif, que ce soit le cas. Alors, la couche protocolaire commune CP 410 laisse la synchronisation se poursuivre avec l'équipement ONU 120. Alors, dans l'étape 617, l'opération de synchronisation se poursuit et se termine (fin libellée SYNC_E sur la Fig. 6) entre l'équipement OLT 110 et l'équipement ONU 120 pour le système de transport nouvellement sélectionné par l'équipement ONU 120. Une fois l'opération de synchronisation terminée, l'équipement ONU 120 peut accéder aux services définis dans le profil utilisateur qui lui est associé, en utilisant le système de transport configuré et synchronisé.

Il ressort ainsi des échanges de la Fig. 6 que, lorsque l'équipement ONU 120 utilise par défaut un système de transport qui ne correspond pas au système de transport qui lui correspond dans le profil utilisateur applicable, l'équipement ONU 120 peut tester un autre système de transport sans attendre la fin de la synchronisation du système de transport par défaut, ce qui accélère sa mise en communication dans le réseau optique d'accès 100.

A noter que dans le cas où l'équipement ONU 120 ne détecte pas de signaux en s'étant configuré pour le système de transport défini par défaut (référence au paramètre WanMode) pendant une fenêtre temporelle de durée prédéfinie, alors l'équipement ONU 120 teste un autre système de transport parmi ceux supportés par l'équipement ONU 120. En effet, l'opérateur de service peut avoir supprimé le système de transport en question du réseau optique d'accès 100.

A noter aussi que le système de transport défini par défaut (référence au paramètre WanMode) peut être modifié par un autre biais que par des messages en provenance de l'équipement OLT 110, par exemple pour des besoins de test.

A noter aussi qu'en cas de perte de synchronisation, l'équipement ONU 120 réitère la procédure ci-dessus en relation avec la Fig. 6.

## Revendications

1. Procédé de mise en communication d'un équipement utilisateur de type ONU (120) avec un équipement de terminaison de ligne de type OLT (110) dans un réseau optique d'accès (100) proposant divers systèmes de transport, l'équipement utilisateur (120) supportant au moins deux systèmes de transport, chaque système de transport étant un ensemble de communication comportant un protocole dédié, le procédé comportant les étapes suivantes :
- l'équipement utilisateur (120) se configure (602) pour communiquer par le biais d'un premier système de transport parmi les systèmes de transport supportés par l'équipement utilisateur (120) ;
- l'équipement utilisateur (120) démarre (604) une synchronisation avec l'équipement de terminaison de ligne (110) pour le premier système de transport ;
le procédé est **caractérisé en ce qu'**il comporte les étapes additionnelles suivantes :
- l'équipement utilisateur (120) transmet (606) via une couche protocolaire (410) chapeautant tout système de transport du réseau optique d'accès (100), sans attendre que la synchronisation avec l'équipement de terminaison de ligne (110) pour le premier système de transport soit terminée, une information dépendant d'un identifiant de l'équipement utilisateur (120) et d'un identifiant du premier système de transport ;
- lorsque le système de transport à utiliser par l'équipement utilisateur (120) n'est pas le premier système de transport, la couche protocolaire (410) chapeautant tout système de transport du réseau optique d'accès (100) du côté de l'équipement de terminaison de ligne (110) interrompt (608) la synchronisation, et l'équipement utilisateur (120) retente (613) la synchronisation avec un second système de transport parmi les systèmes de transport supportés par l'équipement utilisateur ;
- lorsque le système de transport à utiliser par l'équipement utilisateur est le premier système de transport, l'équipement de terminaison de ligne (110) poursuit (617) la synchronisation pour le premier système de transport jusqu'à mise en communication de l'équipement utilisateur (120) dans le réseau optique d'accès (100).

2. Procédé selon la revendication 1, dans lequel l'équipement de terminaison de ligne (110) obtient, dans une base de données, un profil utilisateur associé à l'identifiant de l'équipement utilisateur (120), le profil utilisateur incluant l'identifiant de système de transport à utiliser par l'équipement utilisateur (120).

3. Procédé selon la revendication 2, dans lequel lorsqu'aucun profil utilisateur n'est associé avec l'identifiant de l'équipement utilisateur (120), la couche protocolaire (410) chapeautant tout système de transport du réseau optique d'accès (100) du côté de l'équipement de terminaison de ligne (110) interrompt aussi la synchronisation.

4. Procédé selon l'une quelconque des revendications 1 à 3, dans lequel ladite information est la juxtaposition de l'identifiant de l'équipement utilisateur (120) et de l'identifiant du système de transport configuré par l'équipement utilisateur (120).

5. Procédé selon l'une quelconque des revendications 1 à 4, dans lequel lorsque l'équipement utilisateur (120) ne détecte pas de signaux, en s'étant configuré pour le premier système de transport, pendant une fenêtre temporelle de durée prédéfinie, l'équipement utilisateur (120) teste alors un autre système de transport parmi ceux supportés par l'équipement utilisateur (120).

6. Procédé de mise en communication d'un équipement utilisateur de type ONU (120) avec un équipement de terminaison de ligne de type OLT (110) dans un réseau optique d'accès (100), le procédé étant réalisé par l'équipement utilisateur (120), l'équipement utilisateur (120) supportant au moins deux systèmes de transport, chaque système de transport étant un ensemble de communication comportant un protocole dédié, le procédé comportant les étapes suivantes :
- se configurer (602) pour communiquer par le biais d'un premier système de transport parmi les systèmes de transport supportés par l'équipement utilisateur (120) ;
- démarrer une synchronisation avec l'équipement de terminaison de ligne (110) pour le premier système de transport ;
le procédé est **caractérisé en ce qu'**il comporte les étapes additionnelles suivantes :
- transmettre (606) via une couche protocolaire (410) chapeautant tout système de transport du réseau optique d'accès (100), sans attendre que la synchronisation avec l'équipement de terminaison de ligne (110) pour le premier système de transport soit terminée, une information dépendant d'un identifiant de l'équipement utilisateur (120) et d'un identifiant du premier système de transport ;
- lorsque la synchronisation est interrompue, retenter (613) la synchronisation avec un second système de transport parmi les systèmes de transport supportés par l'équipement utilisateur (120), et sinon, poursuivre (617) la synchronisation pour le premier système de transport jusqu'à mise en communication de l'équipement utilisateur (120) dans le réseau optique d'accès (100).

7. Procédé de mise en communication d'un équipement utilisateur de type ONU (120) avec un équipement de terminaison de ligne de type OLT (110) dans un réseau optique d'accès (100), le procédé étant réalisé par l'équipement de terminaison de ligne (110), l'équipement de terminaison de ligne (110) supportant divers systèmes de transport, chaque système de transport étant un ensemble de communication comportant un protocole dédié, le procédé comportant les étapes suivantes :
- démarrer (604) une synchronisation avec l'équipement utilisateur (120), à l'initiative de ce dernier, pour un premier système de transport ;
le procédé est **caractérisé en ce qu'**il comporte les étapes additionnelles suivantes :
- recevoir via une couche protocolaire (410) chapeautant les systèmes de transport supportés par l'équipement de terminaison de ligne (110), sans attendre que la synchronisation avec l'équipement utilisateur (120) pour le premier système de transport soit terminée, une information dépendant d'un identifiant de l'équipement utilisateur (120) et d'un identifiant du premier système de transport ;
- lorsque le système de transport à utiliser par l'équipement utilisateur n'est pas le premier système de transport, interrompre (608) la synchronisation par la couche protocolaire (410) chapeautant tout système de transport du réseau optique d'accès (100) ;
- lorsque le système de transport à utiliser par l'équipement utilisateur (120) est le premier système de transport, poursuivre (617) la synchronisation pour le premier système de transport jusqu'à mise en communication de l'équipement utilisateur (120) dans le réseau optique d'accès (100).

8. Produit programme d'ordinateur comportant des instructions pour implémenter par l'équipement utilisateur de la revendication 10 le procédé selon la revendication 6 ou par l'équipement de terminaison de ligne de la revendication 11 le procédé selon la revendication 7, lorsque ledit programme est respectivement exécuté par ledit équipement utilisateur ou ledit équipement de terminaison de ligne.

9. Support de stockage d'informations stockant un programme d'ordinateur comprenant des instructions pour implémenter par l'équipement utilisateur de la revendication 10 le procédé selon la revendication 6 ou par l'équipement de terminaison de ligne de la revendication 11 le procédé selon la revendication 7, lorsque ledit programme est respectivement lu et exécuté par ledit équipement utilisateur ou ledit équipement de terminaison de ligne.

10. Equipement utilisateur de type ONU (120) destiné à être mis en communication avec un équipement de terminaison de ligne de type OLT (110) dans un réseau optique d'accès (100), l'équipement utilisateur (120) supportant au moins deux systèmes de transport, chaque système de transport étant un ensemble de communication comportant un protocole dédié, l'équipement utilisateur (120) comportant :
- des moyens pour se configurer (602) pour communiquer par le biais d'un premier système de transport parmi les systèmes de transport supportés par l'équipement utilisateur (120) ;
- des moyens pour démarrer (604) une synchronisation avec l'équipement de terminaison de ligne (110) pour le premier système de transport ;
**caractérisé en ce que** l'équipement utilisateur comporte :
- des moyens pour transmettre (606) via une couche protocolaire (410) chapeautant tout système de transport du réseau optique d'accès (100), sans attendre que la synchronisation avec l'équipement de terminaison de ligne (110) pour le premier système de transport soit terminée, une information dépendant d'un identifiant de l'équipement utilisateur (120) et d'un identifiant du premier système de transport ;
- lorsque la synchronisation est interrompue, des moyens pour retenter (613) la synchronisation avec un second système de transport parmi les systèmes de transport supportés par l'équipement utilisateur (120), et sinon, des moyens pour poursuivre (617) la synchronisation pour le premier système de transport jusqu'à mise en communication de l'équipement utilisateur (120) dans le réseau optique d'accès (100).

11. Equipement de terminaison de ligne de type OLT (110) destiné à être mis en communication avec un équipement utilisateur de type ONU (120) dans un réseau optique d'accès (100), l'équipement de terminaison de ligne (110) supportant divers systèmes de transport, chaque système de transport étant un ensemble de communication comportant un protocole dédié, l'équipement de terminaison de ligne (110) comportant :
- des moyens pour démarrer (604) une synchronisation avec l'équipement utilisateur (120), à l'initiative de ce dernier, pour un premier système de transport ;
**caractérisé en ce que** l'équipement de terminaison de ligne comporte :
- des moyens pour recevoir via une couche protocolaire (410) chapeautant les systèmes de transport supportés par l'équipement de terminaison de ligne (110), sans attendre que la synchronisation avec l'équipement utilisateur (120) pour le premier système de transport soit terminée, une information dépendant d'un identifiant de l'équipement utilisateur (120) et d'un identifiant du premier système de transport ;
- lorsque le système de transport à utiliser par l'équipement utilisateur (120) n'est pas le premier système de transport, des moyens pour interrompre (608) la synchronisation par la couche protocolaire (410) chapeautant tout système de transport du réseau optique d'accès (100) ;
- lorsque le système de transport à utiliser par l'équipement utilisateur (120) est le premier système de transport, des moyens pour poursuivre (617) la synchronisation pour le premier système de transport jusqu'à mise en communication de l'équipement utilisateur (120) dans le réseau optique d'accès (100).

12. Réseau optique d'accès (100) comportant un équipement de terminaison de ligne de type OLT (110) selon la revendication 11 et au moins un équipement utilisateur de type ONU (120) selon la revendication 10.

## Patentansprüche

1. Verfahren zum Kommunikationsaufbau eines Benutzergeräts vom Typ ONU (120) mit einem Leitungsabschlussgerät vom Typ OLT (110) in einem optischen Zugangsnetz (100), das verschiedene Transportsysteme anbietet, wobei das Benutzergerät (120) mindestens zwei Transportsysteme unterstützt, wobei jedes Transportsystem eine Kommunikationsanordnung ist, die ein dediziertes Protokoll umfasst, wobei das Verfahren die folgenden Schritte umfasst:
- das Benutzergerät (120) konfiguriert sich (602), um über ein erstes Transportsystem unter den vom Benutzergerät (120) unterstützten Transportsystemen zu kommunizieren;
- das Benutzergerät (120) startet (604) eine Synchronisation mit dem Leitungsabschlussgerät (110) für das erste Transportsystem;
das Verfahren ist **dadurch gekennzeichnet, dass** es die folgenden zusätzlichen Schritte umfasst:
- das Benutzergerät (120) überträgt (606) über eine Protokollschicht (410), die das gesamte Transportsystem des optischen Zugangsnetzes (100) regelt, eine Information, die von einer Kennung des Benutzergeräts (120) und einer Kennung des ersten Transportsystems abhängt, ohne darauf zu warten, dass die Synchronisation mit dem Leitungsabschlussgerät (110) für das erste Transportsystem abgeschlossen ist;
- wenn das Transportsystem, das durch das Benutzergerät (120) zu nutzen ist, nicht das erste Transportsystem ist, unterbricht (608) die Protokollschicht (410), die das gesamte Transportsystem des optischen Zugangsnetzes (100) regelt, von der Seite des Leitungsabschlussgeräts (110) die Synchronisation, und das Benutzergerät (120) versucht erneut (613) die Synchronisation mit einem zweiten Transportsystem unter den vom Benutzergerät unterstützten Transportsystemen;
- wenn das Transportsystem, das durch das Benutzergerät zu nutzen ist, das erste Transportsystem ist, verfolgt (617) das Leitungsabschlussgerät (110) die Synchronisation für das erste Transportsystem bis zum Kommunikationsaufbau des Benutzergeräts (120) im optischen Zugangsnetz (100).

2. Verfahren nach Anspruch 1, wobei das Leitungsabschlussgerät (110) in der Datenbank ein Benutzerprofil erhält, das einer Kennung des Benutzergeräts (120) zugeordnet ist, wobei das Benutzerprofil das durch das Benutzergerät (120) zu nutzende Transportsystem enthält.

3. Verfahren nach Anspruch 2, wobei die Protokollschicht (410), die das gesamte Transportsystem des optischen Zugangsnetzes (100) regelt, von der Seite des Leitungsabschlussgeräts (110) auch die Synchronisation unterbricht, wenn der Kennung des Benutzergeräts (120) kein Benutzerprofil zugeordnet ist.

4. Verfahren nach einem der Ansprüche 1 bis 3, wobei die Information die Nebeneinanderstellung der Kennung des Benutzergeräts (120) und der Kennung des für das Benutzergerät (120) konfigurierten Transportsystems ist.

5. Verfahren nach einem der Ansprüche 1 bis 4, wobei das Benutzergerät (120) dann ein anderes Transportsystem unter den vom Benutzergerät (120) unterstützten Transportsystemen prüft, wenn das Benutzergerät (120) keine Signale detektiert, wenn es sich während eines Zeitfensters einer vorgegebenen Dauer für das erste Transportsystem konfiguriert hat.

6. Verfahren zum Kommunikationsaufbau eines Benutzergeräts vom Typ ONU (120) mit einem Leitungsabschlussgerät vom Typ OLT (110) in einem optischen Zugangsnetz (100), wobei das Verfahren durch das Benutzergerät (120) durchgeführt wird, wobei das Benutzergerät (120) das mindestens zwei Transportsysteme unterstützt, wobei jedes Transportsystem eine Kommunikationsanordnung ist, die ein dediziertes Protokoll umfasst, wobei das Verfahren die folgenden Schritte umfasst:
- Sichkonfigurieren (602), um über ein erstes Transportsystem unter den vom Benutzergerät (120) unterstützten Transportsystemen zu kommunizieren;
- Starten einer Synchronisation mit dem Leitungsabschlussgerät (110) für das erste Transportsystem;
das Verfahren ist **dadurch gekennzeichnet, dass** es die folgenden zusätzlichen Schritte umfasst:
- Übertragen (606) einer Information, die von einer Kennung des Benutzergeräts (120) und einer Kennung des ersten Transportsystems abhängt, über eine Protokollschicht (410), die das gesamte Transportsystem des optischen Zugangsnetzes (100) regelt, ohne darauf zu warten, dass die Synchronisation mit dem Leitungsabschlussgerät (110) für das erste Transportsystem abgeschlossen ist;
- wenn die Synchronisation unterbrochen wird, erneutes Versuchen (613) der Synchronisation mit einem zweiten Transportsystem unter den vom Benutzergerät (120) unterstützten Transportsystemen und anderenfalls Weiterverfolgen (617) der Synchronisation für das erste Transportsystem bis zum Kommunikationsaufbau des Benutzergeräts (120) im optischen Zugangsnetz (100).

7. Verfahren zum Kommunikationsaufbau eines Benutzergeräts vom Typ ONU (120) mit einem Leitungsabschlussgerät vom Typ OLT (110) in einem optischen Zugangsnetz (100), wobei das Verfahren durch das Leitungsabschlussgerät (110) durchgeführt wird, wobei das Leitungsabschlussgerät (110) verschiedene Transportsysteme unterstützt, wobei jedes Transportsystem eine Kommunikationsanordnung ist, die ein dediziertes Protokoll umfasst, wobei das Verfahren die folgenden Schritte umfasst:
- Starten (604) einer Synchronisation mit dem Benutzergerät (120) auf Initiative des Letzteren für ein erstes Transportsystem;
das Verfahren ist **dadurch gekennzeichnet, dass** es die folgenden zusätzlichen Schritte umfasst:
- Empfangen einer Information, die von einer Kennung des Benutzergeräts (120) und einer Kennung des ersten Transportsystems abhängt, über eine Protokollschicht (410), die die vom Leitungsabschlussgerät (110) unterstützten Transportsysteme regelt, ohne darauf zu warten, dass die Synchronisation mit dem Benutzergerät (120) für das erste Transportsystem abgeschlossen ist;
- wenn das durch das Benutzergerät zu nutzende Transportsystem nicht das erste Transportsystem ist, Unterbrechen (608) der Synchronisation durch die Protokollschicht (410), die das gesamte Transportsystem des optischen Zugangsnetzes (100) regelt;
- wenn das durch das Benutzergerät (120) zu nutzende Transportsystem das erste Transportsystem ist, Weiterverfolgen (617) der Synchronisation für das erste Transportsystem bis zum Kommunikationsaufbau des Benutzergeräts (120) im optischen Zugangsnetz (100).

8. Computerprogrammprodukt, das Anweisungen umfasst, um durch das Benutzergerät des Anspruchs 10 das Verfahren nach Anspruch 6 oder durch das Leitungsabschlussgerät des Anspruchs 11 das Verfahren nach Anspruch 7 zu implementieren, wenn das Programm durch das Benutzergerät bzw. das Leitungsabschlussgerät ausgeführt wird.

9. Informationsspeichermedium, das ein Computerprogramm speichert, das Anweisungen umfasst, um durch das Benutzergerät des Anspruchs 10 das Verfahren nach Anspruch 6 oder durch das Leitungsabschlussgerät des Anspruchs 11 das Verfahren nach Anspruch 7 zu implementieren, wenn das Programm durch das Benutzergerät bzw. das Leitungsabschlussgerät gelesen und ausgeführt wird.

10. Benutzergerät vom Typ ONU (120), das für den Aufbau einer Kommunikation mit einem Leitungsabschlussgerät vom Typ OLT (110) in einem optischen Zugangsnetz (100) bestimmt ist, wobei das Benutzergerät (120) mindestens zwei Transportsysteme unterstützt, wobei jedes Transportsystem eine Kommunikationsanordnung ist, die ein dediziertes Protokoll umfasst, wobei das Benutzergerät (120) umfasst:
- Mittel zum Sichkonfigurieren (602), um über ein erstes Transportsystem unter den vom Benutzergerät (120) unterstützten Transportsystemen zu kommunizieren;
- Mittel zum Starten (604) einer Synchronisation mit dem Leitungsabschlussgerät (110) für das erste Transportsystem;
**dadurch gekennzeichnet, dass** das Benutzergerät umfasst:
- Mittel zum Übertragen (606) einer Information, die von einer Kennung des Benutzergeräts (120) und einer Kennung des ersten Transportsystems abhängt, über eine Protokollschicht (410), die das gesamte Transportsystem des optischen Zugangsnetzes (100) regelt, ohne darauf zu warten, dass die Synchronisation mit dem Leitungsabschlussgerät (110) für das erste Transportsystem abgeschlossen ist;
- wenn die Synchronisation unterbrochen wird, Mittel zum erneuten Versuchen (613) der Synchronisation mit einem zweiten Transportsystem unter den vom Benutzergerät (120) unterstützten Transportsystemen und anderenfalls Mittel zum Weiterverfolgen (617) der Synchronisation für das erste Transportsystem bis zum Kommunikationsaufbau des Benutzergeräts (120) im optischen Zugangsnetz (100).

11. Leitungsabschlussgerät vom Typ OLT (110), das für den Kommunikationsaufbau mit einem Benutzergerät vom Typ ONU (120) in einem optischen Zugangsnetz (100) bestimmt ist, wobei das Leitungsabschlussgerät (110) verschiedene Transportsysteme unterstützt, wobei jedes Transportsystem eine Kommunikationsanordnung ist, die ein dediziertes Protokoll umfasst, wobei das Leitungsabschlussgerät (110) umfasst:
- Mittel zum Starten (604) einer Synchronisation mit dem Benutzergerät (120) auf Initiative des Letzteren für ein erstes Transportsystem;
**dadurch gekennzeichnet, dass** das Leitungsabschlussgerät umfasst:
- Mittel zum Empfangen einer Information, die von einer Kennung des Benutzergeräts (120) und einer Kennung des ersten Transportsystems abhängt, über eine Protokollschicht (410), die die vom Leitungsabschlussgerät (110) unterstützten Transportsysteme regelt, ohne darauf zu warten, dass die Synchronisation mit dem Benutzergerät (120) für das erste Transportsystem abgeschlossen ist;
- wenn das durch das Benutzergerät (120) zu nutzende Transportsystem nicht das erste Transportsystem ist, Mittel zum Unterbrechen (608) der Synchronisation durch die Protokollschicht (410), die das gesamte Transportsystem des optischen Zugangsnetzes (100) regelt;
- wenn das durch das Benutzergerät (120) zu nutzende Transportsystem das erste Transportsystem ist, Mittel zum Weiterverfolgen (617) der Synchronisation für das erste Transportsystem bis zum Kommunikationsaufbau des Benutzergeräts (120) im optischen Zugangsnetz (100).

12. Optisches Zugangsnetz (100), das ein Leitungsabschlussgerät vom Typ OLT (110) nach Anspruch 11 und mindestens ein Benutzergerät vom Typ ONU (120) nach Anspruch 10 umfasst.

## Claims

1. Method for putting user equipment of the ONU type (120) in communication with line termination equipment of the OLT type (110) in an optical access network (100) offering various transport systems, the user equipment (120) supporting at least two transport systems, each transport system being a communication set comprising a dedicated protocol, the method comprising the following steps:
- the user equipment (120) configures itself (602) to communicate by means of a first transport system among the transport systems supported by the user equipment (120);
- the user equipment (120) starts (604) a synchronisation with the line termination equipment (110) for the first transport system;
the method is **characterized in that** it comprises the following additional steps:
- the user equipment (120) transmits (606), via a protocol layer (410) supervising any transport system of the optical access network (100), without waiting for the synchronisation with the line termination equipment (110) for the first transport system to have ended, information dependent on an identifier of the user equipment (120) and an identifier of the first transport system;
- when the transport system to be used by the user equipment (120) is not the first transport system, the protocol layer (410) supervising any transport system of the optical access network (100) at the line termination equipment (110) interrupts (608) the synchronisation, and the user equipment (120) reattempts (613) the synchronisation with a second transport system among the transport systems supported by the user equipment;
- when the transport system to be used by the user equipment is the first transport system, the line termination equipment (110) continues (617) the synchronisation for the first transport system until the user equipment (120) is put in communication in the optical access network (100).

2. Method according to claim 1, wherein the line termination equipment (110) obtains, in a database, a user profile associated with the identifier of the user equipment (120), the user profile including the transport system identifier to be used by the user equipment (120).

3. Method according to claim 2, wherein, when no user profile is associated with the identifier of the user equipment (120), the protocol layer (410) supervising any transport system of the optical access network (100) at the line termination equipment (110) also interrupts the synchronisation.

4. Method according to any one of claims 1 to 3, wherein said information is the juxtaposition of the identifier of the user equipment (120) and the identifier of the transport system configured by the user equipment (120).

5. Method according to any one of claims 1 to 4, wherein, when the user equipment (120) does not detect any signals, while being configured for the first transport system, during a time window of predefined duration, the user equipment (120) then tests another transport system among those supported by the user equipment (120).

6. Method for putting user equipment of the ONU type (120) in communication with line termination equipment of the OLT type (110) in an optical access network (100), the method being implemented by the user equipment (120), the user equipment (120) supporting at least two transport systems, each transport system being a communication set comprising a dedicated protocol, the method comprising the following steps:
- configuring itself (602) to communicate by means of a first transport system among the transport systems supported by the user equipment (120);
- starting a synchronisation with the line termination equipment (110) for the first transport system;
the method is **characterized in that** it comprises the following additional steps:
- transmitting (606) via a protocol layer (410) supervising any transport system of the optical access network (100), without waiting for the synchronisation with the line termination equipment (110) for the first transport system to have ended, information dependent on an identifier of the user equipment (120) and on an identifier of the first transport system;
- when the synchronisation is interrupted, reattempting (613) the synchronisation with a second transport system among the transport systems supported by the user equipment (120), and otherwise continuing (617) the synchronisation for the first transport system until the user equipment (120) is put in communication in the optical access network (100).

7. Method for putting user equipment of the ONU type (120) in communication with line termination equipment of the OLT type (110) in an optical access network (100), the method being implemented by the line termination equipment (110), the line termination equipment (110) supporting various transport systems, each transport system being a communication set comprising a dedicated protocol, the method comprising the following steps:
- starting (604) a synchronisation with the user equipment (120), at the initiative of the latter, for a first transport system;
the method is **characterized in that** it comprises the following additional steps:-receiving, via a protocol layer (410) supervising the transport systems supported by the line termination equipment (110), without waiting for the synchronisation with the user equipment (120) for the first transport system to have ended, information dependent on an identifier of the user equipment (120) and on an identifier of the first transport system;
- when the transport system to be used by the user equipment is not the first transport system, interrupting (608) the synchronisation by the protocol layer (410) supervising any transport system of the optical access network (100);
- when the transport system to be used by the user equipment (120) is the first transport system, continuing (617) the synchronisation for the first transport system until the user equipment (120) is put in communication in the optical access network (100).

8. Computer program product comprising instructions for implementing by the user equipment of claim 10, the method according to claim 6 or by the line termination equipment of claim 11 the method according to claim 7, when said program is respectively executed implementing by said user equipment or said line termination equipment.

9. Information storage medium storing a computer program comprising instructions for implementing by the user equipment of claim 10 the method according to claim 6 or by the line termination equipment of claim 11 the method according to claim 7, when said program is respectively read and executed by said user equipment or said line termination equipment.

10. User equipment of the ONU type (120) intended to be put in communication with line termination equipment of the OLT type (110) in an optical access network (100), the user equipment (120) supporting at least two transport systems, each transport system being a communication set comprising a dedicated protocol, the user equipment (120) comprising:
- means for configuring itself (602) for communicating by means of a first transport system among the transport systems supported by the user equipment (120);
- means for starting (604) a synchronisation with the line termination equipment (110) for the first transport system;
**characterized in that** the user equipment comprises:
- means for transmitting (606), via a protocol layer (410) supervising any transport system of the optical access network (100), without waiting for the synchronisation with the line termination equipment (110) for the first transport system to have ended, information dependent on an identifier of the user equipment (120) and on an identifier of the first transport system;
- when the synchronisation is interrupted, means for reattempting (613) the synchronisation with a second transport system among the transport systems supported by the user equipment (120), and otherwise means for continuing (617) the synchronisation for the first transport system until the user equipment (120) is put in communication in the optical access network (100).

11. Line termination equipment of the OLT type (110), intended to be put in communication with user equipment of the ONU type (120) in an optical access network (100), the line termination equipment (110) supporting various transport systems, each transport system being a communication set comprising a dedicated protocol, the line termination equipment (110) comprising:
- means for starting (604) a synchronisation with the user equipment (120), at the initiative of the latter, for a first transport system;
**characterized in that** the line termination equipment comprises:
- means for receiving, via a protocol layer (410) supervising the transport systems supported by the line termination equipment (110), without waiting for the synchronisation with the user equipment (120) for the first transport system to have ended, information dependent on an identifier of the user equipment (120) and on an identifier of the first transport system;
- when the transport system to be used by the user equipment (120) is not the first transport system, means for interrupting (608) the synchronisation by the protocol layer (410) supervising any transport system of the optical access network (100);
- when the transport system to be used by the user equipment (120) is the first transport system, means for continuing (617) the synchronisation for the first transport system until the user equipment (120) is put in communication in the optical access network (100) .

12. Optical access network (100) comprising line termination equipment of the OLT type (110) according to claim 11 and at least one item of user equipment of the ONU type (120) according to claim 10.
